# FASCICULE DE BREVET EUROPEEN

(11) **EP 2 969 495 B1**
(45) Date de publication et mention de la délivrance du brevet: **29.07.2020**
(21) Numéro de dépôt: 14709295.1
(22) Date de dépôt: 11.03.2014
(51) Int. Cl.: B29C 70/52, B29C 70/56

(54) **PROCÉDÉ ET DISPOSITIF DE RÉALISATION D'UN PROFILÉ EN MATÉRIAU THERMOPLASTIQUE RENFORCÉ PAR DES FIBRES, COMPRENANT UNE ÉTAPE DE MISE EN TENSION DES FIBRES AU COURS DE LEUR IMPRÉGNATION**
VERFAHREN UND VORRICHTUNG ZUR HERSTELLUNG EINES FASERVERSTÄRKTEN THERMOPLASTISCHEN PROFILS MIT EINEM SCHRITT ZUR SPANNEN DES FASERN WÄHREND DER IMPRÄGNIERUNG
PROCESS AND DEVICE FOR PRODUCING A FIBRE-REINFORCED THERMOPLASTIC PROFILE, COMPRISING A STEP OF TENSIONING THE FIBRES DURING THE IMPREGNATION THEREOF

(30) Priorité: 15.03.2013 FR 1352357
(43) Date de publication de la demande: 20.01.2016
(73) Titulaire: Faurecia Automotive Composites, 92000 Nanterre (FR)
(72) Inventeur: AMOSSE, Yannick, Eugène, Jean-Marie, 44470 Carquefou (FR)
(74) Mandataire: Lavoix
(86) Numéro de dépôt international: PCT/EP2014/054720
(87) Numéro de publication internationale: WO 2014/140025

(56) Documents cités:
- WO-A1-2012/149129
- WO-A2-2011/163357
- US-A- 5 540 797

## Description

La présente invention concerne un procédé de réalisation d'un profilé en matériau thermoplastique renforcé par des fibres au moyen d'un dispositif de réalisation du profilé comprenant au moins une chambre d'imprégnation et des moyens de circulation des fibres d'amont en aval du dispositif, le procédé comprenant les étapes suivantes :
- introduire et faire circuler des fibres dans la chambre d'imprégnation,
- injecter un matériau thermoplastique dans la chambre d'imprégnation de sorte à imprégner les fibres circulant dans ladite chambre d'imprégnation avec ledit matériau thermoplastique et à obtenir une préforme du profilé en matériau thermoplastique renforcé par des fibres en sortie de la chambre d'imprégnation,
- réaliser le profilé en matériau thermoplastique renforcé par des fibres à partir de la préforme.

L'invention concerne également un dispositif de réalisation d'un profilé selon un tel procédé de réalisation.

Il est connu de réaliser des profilés, par exemple à destination de l'industrie automobile, en résine renforcée par des fibres, telles que des fibres de verre. De tels profilés peuvent être réalisés par un procédé de pultrusion, au cours duquel les fibres sont imprégnées dans un bain de résine thermodurcissable ou bien un matériau thermodurcissable est injecté sur des fibres et imprègne celles-ci, puis les fibres sont chauffées afin de se solidifier. L'ensemble est ensuite tiré et découpé à la longueur souhaitée pour former les profilés.

Cependant, de tels profilés, réalisés en matériau thermodurcissable, ne présentent pas un comportement satisfaisant pour l'industrie automobile, notamment en matière d'absorption d'énergie. En effet, ces profilés ont tendance à casser lors d'un choc et ne sont pas aptes à se déformer, ce qui les rend impropre à utiliser pour réaliser certaines fonctions d'un véhicule.

Pour pallier cet inconvénient, il a été proposé de remplacer le matériau thermodurcissable par un matériau thermoplastique. En effet, les matériaux thermoplastiques présentent un caractère viscoélastique qui améliore le comportement des profilés en cas de chocs et d'impacts en permettant leur déformation. obtenus peuvent donc être utilisés dans l'industrie automobile, par exemple pour De plus, les matériaux thermoplastiques sont considérés comme recyclables. Les profilés réaliser des longerons ou autre.

Cependant, l'utilisation d'un matériau thermoplastique dans un procédé de pultrusion est problématique, car le matériau thermoplastique est solide à température ambiante, liquide au-dessus de sa température de fusion et redevient solide après refroidissement, ce qui nécessite une imprégnation des fibres à haute température. Les matériaux thermoplastiques présentent également une viscosité élevée par rapport aux matériaux thermodurcissables. Ces caractéristiques posent des problèmes de mise en œuvre du procédé.

Les documents WO 2011/163357 A2 et US 5 540 797 A décrivent chacun un procédé de réalisation d'un profilé en matériau thermoplastique renforcé par des fibres dans une chambre d'imprégnation.

L'un des buts de l'invention est de pallier ces inconvénients en proposant un procédé de réalisation d'un profilé en matériau thermoplastique renforcé par des fibres, dans lequel l'imprégnation des fibres par le matériau thermoplastique est améliorée pour obtenir un matériau composite sain (sans fibres sèches ni porosités).

A cet effet, l'invention concerne un procédé de réalisation selon la revendication 1.

L'imprégnation des fibres se fait alors que celles-ci sont tendues et créent un coin avec la chambre d'imprégnation, ce qui favorise l'augmentation de la pression et une bonne imprégnation alors que le matériau présente une viscosité relativement élevée. Ainsi, la matière thermoplastique est « coincée » et doit traverser les fibres quelque soit sa viscosité à la température de fusion, ce qui facilite la mise en oeuvre du procédé.

Selon d'autres caractéristiques le procédé de réalisation est selon au moins l'une des revendications 2 à 4.

L'invention concerne également un dispositif de réalisation d'un profilé en matériau thermoplastique selon la revendication 5.

Selon d'autres caractéristiques le dispositif de réalisation est selon au moins l'une des revendications 6 à 14.

D'autres aspects et avantages de l'invention apparaîtront à la lecture de la description qui suit, donnée à titre d'exemple et faite en références aux dessins annexés, dans lesquels :
- la Fig. 1 est une représentation schématique d'un dispositif de réalisation d'un profilé en matériau thermoplastique renforcé par des fibres selon l'invention,
- la Fig. 2 est une représentation schématique en coupe de l'intérieur d'une filière chaude selon un premier mode de réalisation du dispositif de la Fig. 1,
- la Fig. 3 est une représentation schématique en coupe selon l'axe III-III de la Fig. 2,
- la Fig. 4 est une représentation schématique en coupe de l'intérieur d'une filière chaude selon un deuxième mode de réalisation du dispositif de la Fig. 1,
- la Fig. 5 est une représentation schématique en coupe selon l'axe V-V de la Fig. 4,
- la Fig. 6 est une représentation schématique en coupe selon l'axe VI-VI de la Fig. 4,
- la Fig. 7 est une représentation schématique en coupe selon l'axe VII-VII de la Fig. 5,
- la Fig. 8 est une représentation schématique en coupe d'une chambre de formage, selon un premier mode de réalisation,
- la Fig. 9 est une représentation schématique en coupe selon l'axe IX-IX de la Fig. 8, et
- la Fig. 10 est une représentation schématique en coupe d'une chambre de formage selon un deuxième mode de réalisation.

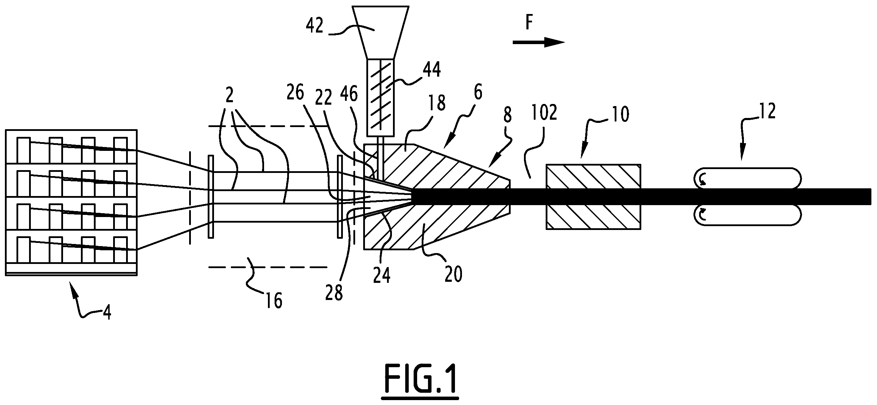

En référence à la Fig. 1, on décrit un procédé et un dispositif de réalisation d'un profilé en matériau thermoplastique, tel que du polyamide (6, 6.6, 11, 12, etc.) ou du polypropylène ou autre, renforcé par des fibres, telles que des fibres de verre.

Les profilés obtenus par le procédé de l'invention peuvent être de différentes formes et présenter une section sensiblement plane ou ouverte, par exemple en forme du U ou de V, ou une section fermée creuse, pour des profilés tubulaires, cylindrique à base de révolution ou à base carrée ou autre. De tels profilés sont par exemple utilisés dans l'industrie automobile pour former des longerons, des pièces de liaison, des renforts ou autre. Bien entendu, de tels profilés pourraient également être utilisés dans d'autres domaines que l'industrie automobile.

Les termes « amont » et « aval » sont définis par rapport à la direction de défilement des fibres 2 dans le dispositif, les fibres étant nues en amont et formant le profilé en étant imprégnées et revêtues par un matériau thermoplastique en aval du dispositif. La direction amont-aval est représentée par la flèche F sur les figures 1 à 4.

D'amont en aval, le dispositif comprend essentiellement une source de fibres 4, une chambre d'imprégnation 6, une chambre de pré-consolidation 8, l'ensemble chambre d'imprégnation 6 et chambre de pré-consolidation formant une filière chaude, une chambre de formage 10, dite filière froide, des moyens de traction du profilé et des fibres 12 agencés pour faire circuler les fibres nues et imprégnées d'amont en aval et des moyens de coupe (non représentés) en sortie du dispositif.

La source de fibres 4, les moyens de traction 12 et les moyens de coupe sont classiques pour un dispositif et un procédé de réalisation de profilés par pultrusion et ne seront pas décrits en détail ici.

La source de fibres 4 est par exemple formée par un rack d'une pluralité de bobines 14 de fibres 2 continues, qui sont déroulées des bobines 14 et défilent d'amont en aval dans le dispositif grâce à un dispositif de séparation et de distribution 16, agencé immédiatement en aval de la source de fibres 4, également classique dans ce type de dispositif, et grâce aux moyens de traction 12. Ainsi, les fibres 2 alimentent de façon continue le dispositif et notamment la chambre d'imprégnation 6 disposée en aval du dispositif de séparation et de distribution 16.

En amont de la chambre d'imprégnation, les fibres 2 sont chauffées, par exemple dans le dispositif de séparation et de distribution 16, à une température proche de la température de fusion du matériau thermoplastique utilisé

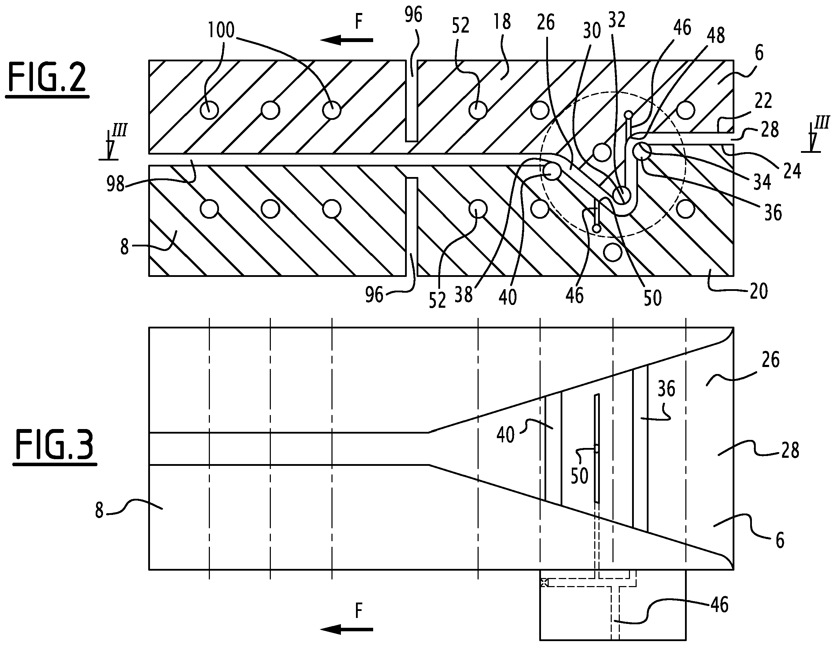

En relation avec les Fig. 2 et 3, on décrit à présent la chambre d'imprégnation 6 selon un premier mode de réalisation de l'invention. Cette chambre d'imprégnation 6 est adaptée pour réaliser des profilés de sections planes ou ouvertes, par exemple en U ou en L ou autre.

La chambre d'imprégnation 6, faisant partie de la filière chaude, est formée par une partie supérieure 18 et par une partie inférieure 20, comprenant respectivement une paroi supérieure 22 et une paroi inférieure 24 s'étendant l'une en regard de l'autre et définissant entre elles un volume d'imprégnation 26.

Les parois supérieure 22 et inférieure 24 convergent l'une vers l'autre selon la direction amont-aval, de sorte que le volume d'imprégnation 26 est de forme sensiblement tronconique ou conique et diminue progressivement selon la direction amont-aval, comme représenté sur les Fig. 1 et 3, afin que la pression dans le volume d'imprégnation 26 augmente progressivement selon la direction amont-aval, comme cela sera décrit ultérieurement.

L'extrémité amont 28 du volume d'imprégnation 26 est ouverte vers le dispositif de séparation et de distribution 16, les fibres 2 nues, issues de la source de fibres 4, pénétrant dans le volume d'imprégnation 26 par cette extrémité amont 28.

La paroi supérieure 22 comprend une ligne de contact, dite ligne de contact supérieure 30, entre les fibres 2 et la paroi supérieure 22. La ligne de contact supérieure 30 est par exemple formée par la paroi externe d'un cylindre 32 s'étendant selon un axe sensiblement horizontal et perpendiculaire à la direction amont-aval. La paroi externe du cylindre 32 s'étend en partie en saillie dans le volume d'imprégnation 26 et forme ainsi une partie de la paroi supérieure 22. Au droit de la ligne de contact supérieure 30, les parois supérieure 22 et inférieure 24 forment un coude par rapport à la direction amont-aval, c'est-à-dire que ces parois changent de direction par rapport à la direction amont-aval au droit de la ligne de contact supérieure 30.

La paroi inférieure 24 comprend une première ligne de contact, dite première ligne de contact inférieure 34, entre les fibres 2 et la paroi inférieure 24, située en amont de la ligne de contact supérieure 30 par rapport à la direction amont-aval. La première ligne de contact inférieure 34 est par exemple formée par la paroi externe d'un cylindre 36 s'étendant selon un axe sensiblement horizontal et perpendiculaire à la direction amont-aval. La paroi externe du cylindre 36 s'étend en partie en saillie dans le volume d'imprégnation 26 et forme ainsi une partie de la paroi inférieure 24. Au droit de la première ligne de contact inférieure 34, les parois supérieure 22 et inférieure 24 forment un coude par rapport à la direction amont-aval, c'est-à-dire que ces parois changent de direction par rapport à la direction amont-aval au droit de la première ligne de contact inférieure 34. Du fait des coudes formés au droit de la ligne de contact supérieure 30 et de la première ligne de contact inférieure 34, le volume d'imprégnation 26 s'étend selon une première direction, par exemple sensiblement perpendiculaire à la direction amont-aval entre la première ligne de contact inférieure 34 et la ligne de contact supérieure 30, comme représenté sur la Fig. 2.

La paroi inférieure 24 comprend en outre une deuxième ligne de contact, dite deuxième ligne de contact inférieure 38, entre les fibres 2 et la paroi inférieure 24, située en aval de la ligne de contact supérieure 30 par rapport à la direction amont-aval. La deuxième ligne de contact inférieure 38 est par exemple formée par la paroi externe d'un cylindre 40 s'étendant selon un axe sensiblement horizontal et perpendiculaire à la direction amont-aval. La paroi externe du cylindre 40 s'étend en partie en saillie dans le volume d'imprégnation 26 et forme ainsi une partie de la paroi inférieure 24. Au droit de la deuxième ligne de contact inférieure 38, les parois supérieure 22 et inférieure 24 forment un coude par rapport à la direction amont-aval, c'est-à-dire que ces parois changent de direction par rapport à la direction amont-aval au droit de la deuxième ligne de contact inférieure 38. Du fait des coudes formés au droit de la ligne de contact supérieure 30 et de la deuxième ligne de contact inférieure 38, le volume d'imprégnation 26 s'étend selon une deuxième direction, différente de la première direction et par exemple sensiblement inclinée par rapport à la direction amont-aval entre la ligne de contact supérieure 30 et la deuxième ligne de contact inférieure 38, comme représenté sur la Fig. 2.

En amont de la première ligne de contact inférieure 34 et en aval de la deuxième ligne de contact inférieure 38, le volume d'imprégnation 26 s'étend sensiblement selon la direction amont-aval.

Cette forme particulière du volume d'imprégnation 26 de la première ligne de contact inférieure 34 à la deuxième ligne de contact inférieure 38 et la traction exercée sur les fibres 2 en aval de la chambre d'imprégnation 6 permettent de former des moyens de mise en tension des fibres 2 à l'intérieur de la chambre d'imprégnation et d'assurer une tension des fibres 2 dans le volume d'imprégnation 26, d'une part entre la première ligne de contact inférieure 34 et la ligne de contact supérieure 30 et d'autre part entre la ligne de contact supérieure 30 et la deuxième ligne de contact inférieure 38.

Des moyens d'injection du matériau thermoplastique sont agencés pour déboucher dans le volume d'imprégnation 6. En amont de ces moyens d'injection et comme représenté sur la Fig. 1, le dispositif comprend une source de matériau thermoplastique 42. Le matériau thermoplastique est par exemple stocké sous forme de granulés solides à température ambiante. Ces granulés sont passés par une vis 44 afin de les plastifier et chauffés à une température supérieure à la température de fusion du matériau thermoplastique afin de liquéfier le matériau thermoplastique. La vis 44 est classique pour un dispositif et un procédé de réalisation de pièces par injection ou extrusion et ne sera pas décrite en détail ici. Un canal 46 achemine ensuite le matériau thermoplastique liquide de la vis d'extrusion 44 au volume d'imprégnation 26. Le canal 46 est agencé pour déboucher d'une part dans la paroi supérieure 22 de la partie supérieure 18 et d'autre part dans la paroi inférieure 24 de la partie inférieure 20 de la chambre d'imprégnation 6, de sorte à alimenter le volume d'imprégnation 26 en matériau thermoplastique et à faire circuler ce matériau selon la direction amont-aval.

Le canal 46 débouche dans la paroi supérieure 22 entre la première ligne de contact inférieure 34 et la ligne de contact supérieure 30 de sorte à former un premier seuil d'injection 48 du matériau thermoplastique d'un côté des fibres tendues tourné vers la paroi supérieure 22. Le canal 46 débouche dans la paroi inférieure 24 entre la ligne de contact supérieure 30 et la deuxième ligne de contact inférieure 38 de sorte à former un deuxième seuil d'injection 50 du matériau thermoplastique de l'autre côté des fibres tendues, tourné vers la paroi inférieure 24. Ainsi, on assure une injection du matériau thermoplastique directement sur les fibres tendues de tous les côtés des fibres, ce qui assure une bonne imprégnation des fibres par le matériau thermoplastique. Afin d'améliorer l'injection du matériau thermoplastique, plusieurs seuils d'injection peuvent être prévus dans la paroi supérieure 22 et/ou dans la paroi inférieure 24 en regard des fibres tendues.

En outre, au fur et à mesure que les fibres avancent d'amont en aval dans la chambre d'imprégnation 6 en aval des seuils d'injection 48 et 50, la pression augmente dans le volume d'imprégnation 26, du fait de la diminution de ce volume, du coin formé entre la paroi supérieure 22 et les fibres 2 tendues entre la première ligne de contact inférieure 34 et la ligne de contact supérieure 30 d'une part et du coin formé entre la paroi inférieure 24 et les fibres 2 tendues entre la ligne de contact supérieure 30 et la deuxième ligne de contact inférieure 38 d'autre part, comme décrit précédemment. L'imprégnation des fibres est ainsi encore améliorée à température régulée. Une imprégnation satisfaisante des fibres est fondamentale afin d'assurer une bonne cohésion, et donc une qualité satisfaisante, du profilé formé en sortie du dispositif.

L'intérieur de la chambre d'imprégnation 6 est maintenu à une température supérieure à la température de fusion du matériau thermoplastique, par exemple supérieure de 10°C à 20°C, afin que le matériau thermoplastique reste liquide une fois injecté dans le volume d'imprégnation 26. A cet effet, la partie supérieure 18 et la partie inférieure 20 de la chambre d'imprégnation 6 comprennent des canaux 52 de régulation de la température. Ces canaux 52 sont par exemple traversés par un fluide caloporteur ou sont chargés avec des éléments chauffants afin de permettre le contrôle de la température dans la chambre d'imprégnation 6. Cette chambre 6 peut être en outre revêtue par une ou plusieurs plaques isolantes (non représentées) permettant de conserver la température dans la chambre d'imprégnation 6. On notera que la température n'a pas besoin d'être augmentée afin d'augmenter la fluidité du matériau thermoplastique du fait de l'imprégnation satisfaisante offerte par l'injection du matériau directement sur les fibres tendues, de tous les côtés de celles-ci, et de l'augmentation progressive de la pression dans le volume d'imprégnation 26.

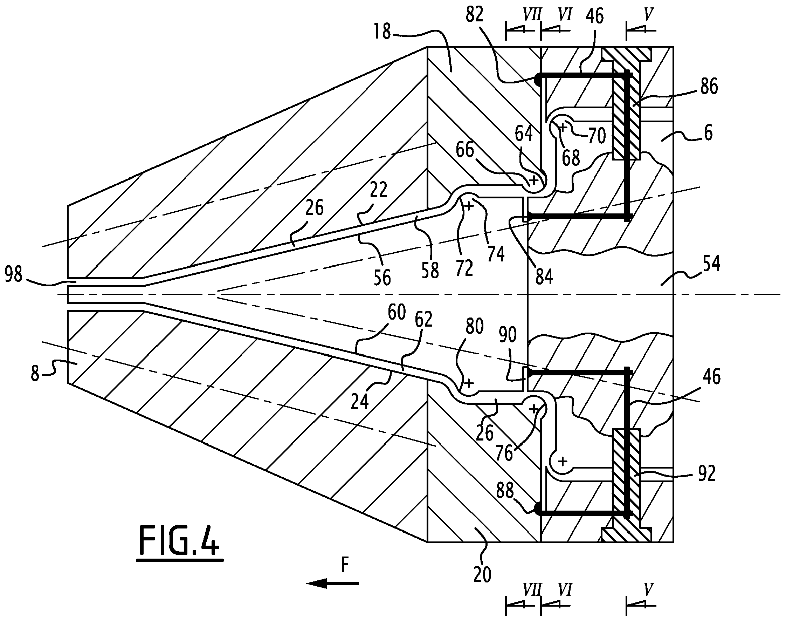

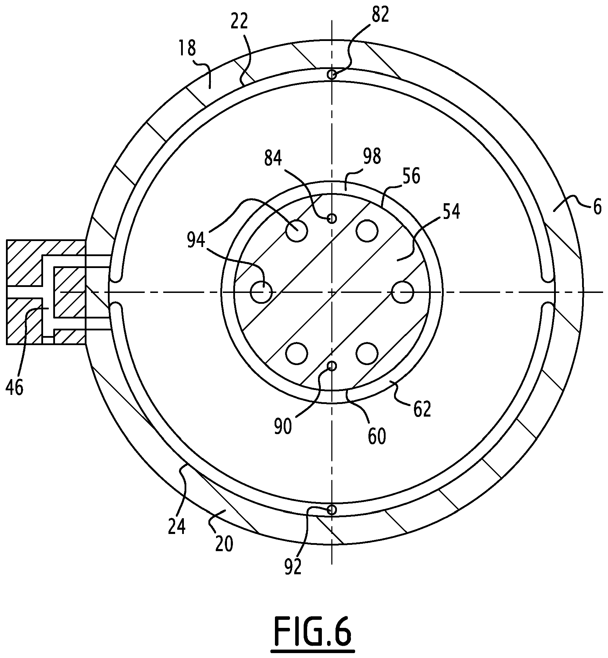

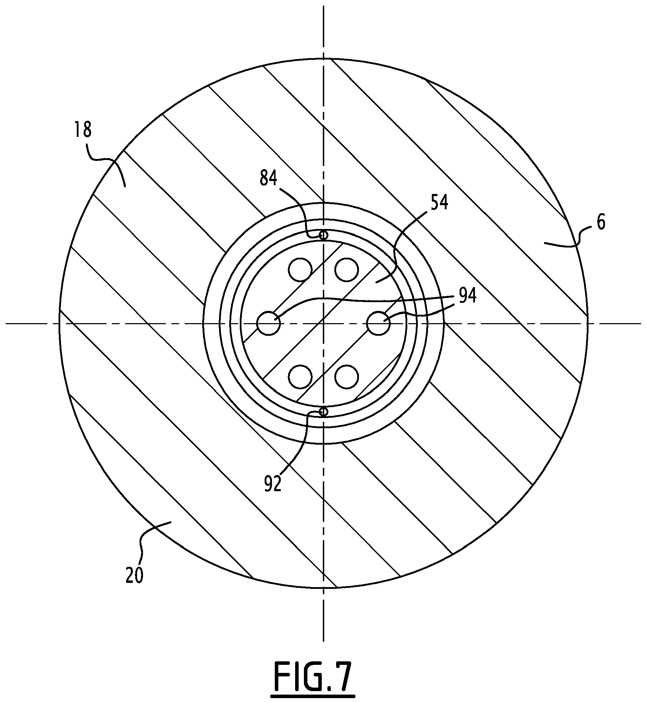

En relation avec les Fig. 4 à 7, on décrit à présent la chambre d'imprégnation 6 selon un deuxième mode de réalisation de l'invention. Cette chambre d'imprégnation 6 est adaptée pour réaliser des profilés de sections fermées et creuses, tels que des tubes. Les références numériques des éléments communs de la chambre d'imprégnation 6 selon les premier et deuxième modes de réalisation sont identiques.

Cette chambre d'imprégnation 6 diffère de la chambre d'imprégnation décrite précédemment en relation avec le premier mode de réalisation, en ce qu'elle comprend un mandrin 54 s'étendant entre la partie supérieure 18 et la partie inférieure 20.

Le mandrin 54 comprend une paroi supérieure 56 s'étendant en regard de la paroi supérieure 22 de la partie supérieure 18, de sorte à délimiter avec celle-ci une chambre d'imprégnation supérieure 58. La paroi supérieure 56 du mandrin 54 s'étend sensiblement parallèlement à la paroi supérieure 22 de la partie supérieure 18.

Le mandrin 54 comprend une paroi inférieure 60 s'étendant en regard de la paroi inférieure 24 de la partie inférieure 20 de sorte à définir avec celle-ci une chambre d'imprégnation inférieure 62. La paroi inférieure 60 s'étend sensiblement parallèlement à la paroi inférieure 24 de la partie inférieure 20.

Le mandrin 54 présente une forme sensiblement tronconique ou conique de sorte à suivre la convergence des parois supérieure 22 et inférieure 24 des parties supérieure 18 et inférieure 20. Le volume des chambres d'imprégnation supérieure 58 et inférieure 62 décroît donc de façon progressive de l'amont vers l'aval.

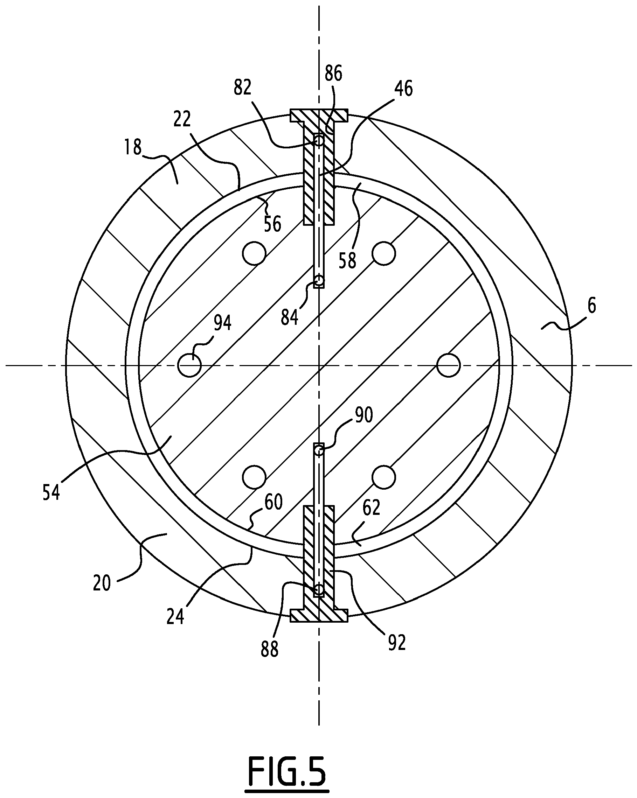

Les chambres d'imprégnation supérieure 58 et inférieure 62 communiquent entre elles de part et d'autre du mandrin 54 dans un plan contenant la direction amont-aval, de sorte à former une chambre d'imprégnation 6 ayant par exemple une forme annulaire, comme représenté sur les Fig. 5 à 7.

Le mandrin 54 est maintenu centré entre les parties supérieure 18 et inférieure 20 par des pions de centrage (non représentés) ou par auto-centrage. Dans ce dernier cas, le mandrin 54 est légèrement flottant entre les parties supérieure 18 et inférieure 20 et est maintenu centré par les fibres 2, également réparties, passant dans les chambres d'imprégnation supérieure 58 et inférieure 62.

Les fibres sont tirées au travers des chambres d'imprégnation supérieure 58 et inférieure 62 d'amont en aval de sorte à entourer toute la périphérie du mandrin 54.

La paroi supérieure 22 de la partie supérieure 18 comprend une ligne de contact, dite ligne de contact supérieure 64, entre les fibres 2 et la paroi supérieure 22. La ligne de contact supérieure 64 est par exemple formée par une protubérance 66 formée dans la paroi supérieure 22 de la partie supérieure et dont la section forme une partie de cercle d'axe sensiblement perpendiculaire à la direction amont-aval. La ligne de contact supérieure 64 suit le contour de la section de la paroi supérieure 22. Au droit de la ligne de contact supérieure 64, les parois supérieures 22 et 56 de la partie supérieure 18 et du mandrin 54 forment un coude par rapport à la direction amont-aval, c'est-à-dire que ces parois changent de direction par rapport à la direction amont-aval au droit de la ligne de contact supérieure 64.

La paroi supérieure 56 du mandrin 54 comprend une ligne de contact, dite première ligne de contact supérieure de mandrin 68, entre les fibres 2 et la paroi supérieure 56 du mandrin 54, située en amont de la ligne de contact supérieure 64. La première ligne de contact supérieure de mandrin 68 est par exemple formée par une protubérance 70 de la paroi supérieure 56 du mandrin 54 et dont la section forme une partie de cercle d'axe sensiblement perpendiculaire à la direction amont-aval. La première ligne de contact supérieure de mandrin 68 suit le contour de la section de la paroi supérieure de mandrin 56. Au droit de la première ligne de contact supérieure de mandrin 68, les parois supérieures 22 et 56 de la partie supérieure 18 et du mandrin 54 forment un coude par rapport à la direction amont-aval, c'est-à-dire que ces parois changent de direction par rapport à la direction amont-aval au droit de la première ligne de contact supérieure de mandrin 68. Du fait des coudes formés au droit de la ligne de contact supérieure 64 et de la première ligne de contact supérieure de mandrin 68, le volume d'imprégnation 26 de la chambre d'imprégnation supérieure 58 s'étend selon une première direction, par exemple sensiblement perpendiculaire à la direction amont-aval entre la première ligne de contact supérieure de mandrin 68 et la ligne de contact supérieure 64, comme représenté sur la Fig. 4.

La paroi supérieure 56 du mandrin 54 comprend en outre une ligne de contact, dite deuxième ligne de contact supérieure de mandrin 72, entre les fibres 2 et la paroi supérieure 56 du mandrin 54, située en aval de la ligne de contact supérieure 64. La deuxième ligne de contact supérieure de mandrin 72 est par exemple formée par une protubérance 74 de la paroi supérieure 56 du mandrin 54 et dont la section forme une partie de cercle d'axe sensiblement perpendiculaire à la direction amont-aval. La deuxième ligne de contact supérieure de mandrin 72 suit le contour de la section de la paroi supérieure de mandrin 56. Au droit de la deuxième ligne de contact supérieure de mandrin 72, les parois supérieures 22 et 56 de la partie supérieure 18 et du mandrin 54 forment un coude par rapport à la direction amont-aval, c'est-à-dire que ces parois changent de direction par rapport à la direction amont-aval au droit de la deuxième ligne de contact supérieure de mandrin 72. Du fait des coudes formés au droit de la ligne de contact supérieure 64 et de la deuxième ligne de contact supérieure de mandrin 72, le volume d'imprégnation 26 de la chambre d'imprégnation supérieure 58 s'étend selon une deuxième direction, différente de la première direction, par exemple la direction amont-aval entre la ligne de contact supérieure 64 et la deuxième ligne de contact supérieure de mandrin 72, comme représenté sur la Fig. 4.

En amont de la première ligne de contact supérieure de mandrin 68, le volume d'imprégnation 26 s'étend sensiblement selon la direction amont-aval. En aval de la deuxième ligne de contact supérieure de mandrin 72, le volume d'imprégnation 26 s'étend selon une direction inclinée par rapport à la direction amont-aval suivant la direction de la paroi supérieure 56 du mandrin 54, comme représenté sur la Fig. 4.

Cette forme particulière du volume d'imprégnation 26 de la chambre d'imprégnation supérieure 58, de la première ligne de contact supérieure de mandrin 68 à la deuxième ligne de contact supérieure de mandrin 72 et la traction exercée sur les fibres 2 en aval de la chambre d'imprégnation 6 permettent de former des moyens de mise en tension des fibres 2 à l'intérieur de la chambre d'imprégnation et d'assurer une tension des fibres 2 dans le volume d'imprégnation 26, d'une part entre la première ligne de contact supérieure de mandrin 68 et la ligne de contact supérieure 64 et d'autre part entre la ligne de contact supérieure 64 et la deuxième ligne de contact supérieure de mandrin 72.

La chambre d'imprégnation inférieure 62 est sensiblement symétrique de celle de la chambre d'imprégnation supérieure 58.

Ainsi, la paroi inférieure 24 de la partie inférieure 20 comprend une ligne de contact inférieure 76 entre les fibres 2 et la paroi inférieure 20, au droit de laquelle les parois inférieures 24 et 60 de la partie inférieure 20 et du mandrin 54 forment un coude.

La paroi inférieure 60 du mandrin 54 comprend quant à elle une première ligne de contact inférieure de mandrin 78, disposée en amont de la ligne de contact inférieure 76, et une deuxième ligne de contact inférieure de mandrin 80, disposée en aval de la ligne de contact inférieure 76, au droit desquelles les parois inférieures 24 et 60 de la partie inférieure 20 et du mandrin 54 forment un coude.

Le volume d'imprégnation 26 s'étend ainsi selon une troisième direction, par exemple sensiblement perpendiculaire à la direction amont-aval entre la première ligne de contact inférieure de mandrin 78 et la ligne de contact inférieure 76, et selon une quatrième direction, différente de la troisième direction, par exemple la direction amont-aval, entre la ligne de contact inférieure 76 et la deuxième ligne de contact inférieure de mandrin 80.

Cette forme particulière du volume d'imprégnation 26 de la chambre d'imprégnation inférieure 62, de la première ligne de contact inférieure de mandrin 78 à la deuxième ligne de contact inférieure de mandrin 80 et la traction exercée sur les fibres 2 en aval de la chambre d'imprégnation 6 permettent d'assurer une tension des fibres 2 dans le volume d'imprégnation 26, d'une part entre la première ligne de contact inférieure de mandrin 78 et la ligne de contact inférieure 76 et d'autre part entre la ligne de contact inférieure 76 et la deuxième ligne de contact inférieure de mandrin 80.

Comme pour la chambre d'imprégnation 6 du premier mode de réalisation, des moyens d'injection d'un matériau thermoplastique sont agencés pour injecter un matériau thermoplastique dans les chambres d'imprégnation supérieure 58 et inférieure 62 à partir de la source de matériau thermoplastique 42 en passant par la vis 44 et en étant acheminé sous forme liquide dans les chambres d'imprégnation par un canal 46.

Selon le deuxième mode de réalisation et pour la chambre d'imprégnation supérieure 58, le canal 46 débouche d'une part dans la paroi supérieure 22 de la partie supérieure 18 entre la première ligne de contact supérieure de mandrin 68 et la ligne de contact supérieure 64 et d'autre part dans la paroi supérieure du mandrin 56 entre la ligne de contact supérieure 64 et la deuxième ligne de contact supérieure de mandrin 72. Ainsi, les moyens d'injection comprennent un premier seuil d'injection 82 du matériau thermoplastique d'un côté des fibres tendues tourné vers la paroi supérieure 22 de la partie supérieure 18 et un deuxième seuil d'injection 84 du matériau thermoplastique de l'autre côté des fibres tendues tourné vers la paroi supérieure 56 du mandrin 54. Afin d'acheminer le matériau thermoplastique vers le mandrin, le canal 46 s'étend au travers d'un pion 86 reliant la partie supérieure 18 au mandrin 54 et passant dans la chambre d'imprégnation supérieure 58 au travers des fibres 2 passant par cette chambre, comme représenté sur la Flg. 4.

De même, pour la chambre d'imprégnation inférieure 62, le canal 46 débouche d'une part dans la paroi inférieure 24 de la partie inférieure 18 entre la première ligne de contact inférieure de mandrin 78 et la ligne de contact inférieure 76 et d'autre part dans la paroi inférieure du mandrin 60 entre la ligne de contact inférieure 76 et la deuxième ligne de contact inférieure de mandrin 80. Ainsi, les moyens d'injection comprennent un troisième seuil d'injection 88 du matériau thermoplastique d'un côté des fibres tendues tourné vers la paroi inférieure 24 de la partie inférieure 20 et un quatrième seuil d'injection 90 du matériau thermoplastique de l'autre côté des fibres tendues tourné vers la paroi inférieure 60 du mandrin 54. Afin d'acheminer le matériau thermoplastique vers le mandrin, le canal 46 s'étend au travers d'un pion 92 reliant la partie inférieure 20 au mandrin 54 et passant dans la chambre d'imprégnation inférieure 62 au travers des fibres 2 passant par cette chambre, comme représenté sur la Flg. 4.

Ainsi, on assure une injection du matériau thermoplastique directement sur les fibres tendues de tous les côtés des fibres dans les chambres d'imprégnation supérieure 58 et inférieure 62, ce qui assure une bonne imprégnation des fibres par le matériau thermoplastique dans toute la chambre d'imprégnation 6. Afin d'améliorer l'injection du matériau thermoplastique, plusieurs seuils d'injection peuvent être prévus dans la paroi supérieure 22 et/ou dans la paroi inférieure 24 et/ou dans les parois supérieure et inférieure du mandrin 54 en regard des fibres tendues.

Comme pour le premier mode de réalisation, l'imprégnation est encore améliorée du fait de l'augmentation progressive de la pression dans le volume d'imprégnation 26. Comme pour le premier mode de réalisation, l'imprégnation est encore améliorée du fait du coin formé entre la paroi supérieure 22 et les fibres 2 tendues entre la première ligne de contact supérieure de mandrin 68 et la ligne de contact supérieure 64, du coin formé entre la paroi supérieure 56 du mandrin 54 et les fibres 2 tendues entre la ligne de contact supérieure 64 et la deuxième ligne de contact supérieure de mandrin 72, du coin formé entre la paroi inférieure 24 et les fibres 2 tendues entre la première ligne de contact inférieure de mandrin 78 et la ligne de contact inférieure 76, du coin formé entre la paroi inférieure 60 du mandrin 54 et les fibres 2 tendues entre la ligne de contact inférieure 76 et la deuxième ligne de contact inférieure de mandrin 80.

Comme pour le premier mode de réalisation, l'intérieur de la chambre d'imprégnation 6 est maintenu à une température supérieure à la température de fusion du matériau thermoplastique, par exemple supérieure de 10°C à 20°C, afin que le matériau thermoplastique reste liquide une fois injecté dans le volume d'imprégnation 26. A cet effet, le mandrin 54 comprend des canaux 94 de régulation de la température agencés pour réguler la température à la fois dans la chambre d'imprégnation supérieure 58 et dans la chambre d'imprégnation inférieure 62. Les parties supérieure 18 et inférieure 20 comprennent également des canaux de régulation de la température. De même, la chambre d'imprégnation 6 peut être revêtue par des plaques d'isolation thermique permettant de conserver la température dans la chambre d'imprégnation.

En sortie de la chambre d'imprégnation 6, selon le premier et le deuxième mode de réalisation, la forme du volume d'imprégnation est sensiblement celui du profilé à obtenir en sortie du dispositif. En sortie de la chambre 6, on obtient ainsi une préforme du profilé, comprenant une matrice en matériau thermoplastique liquide à l'intérieur de laquelle s'étendent des fibres 2 imprégnées par le matériau thermoplastique.

En relation avec la Fig. 2, on décrit à présent la chambre de pré-consolidation 8, qui est sensiblement identique pour le premier et le deuxième mode de réalisation.

La chambre de pré-consolidation 8 s'étend immédiatement en aval de la chambre d'imprégnation 6 et est par exemple formée par les mêmes parties supérieure et inférieure 18 et 20, et éventuellement le mandrin 54, que la chambre d'imprégnation 6. La chambre de pré-consolidation 8 est toutefois séparée de la chambre d'imprégnation par un isolant thermique 96, par exemple formé par une lame d'air formé par une ouverture s'étendant dans les parties supérieure et inférieure 18 et 20 entre la chambre d'imprégnation 6 et la chambre de pré-consolidation 8, comme représenté sur la Fig. 2.

La chambre de pré-consolidation 8 comprend un volume de pré-consolidation 98, en communication avec et s'étendant dans la continuité du volume d'imprégnation 26, de sorte que, lorsque la préforme est tirée par les moyens de traction 12, elle passe du volume d'imprégnation 26 au volume de pré-consolidation 98. Le volume de pré-consolidation 98 présente en section la forme de la section du profilé à réaliser, de sorte que la préforme acquière la forme du profilé à réaliser en passant dans le volume de pré-consolidation.

La température de la chambre de pré-consolidation 8 est régulée pour être sensiblement voisine de la température de cristallisation du matériau thermoplastique utilisé. Cette régulation de la température est assurée par des canaux 100 s'étendant dans les parties supérieure et inférieure 18 et 20 et/ou éventuellement dans le mandrin 54. Un fluide caloporteur circule dans ces canaux 100 ou des éléments chauffants sont disposés dans ces canaux 100 afin de permettre le contrôle de la température dans le volume de pré-consolidation 98. La chambre de pré-consolidation 8 peut être, comme la chambre d'imprégnation 6, revêtue de plaques d'isolation thermique afin de maintenir la température constante dans la chambre de pré-consolidation 8.

Le passage de la chambre d'imprégnation 6, présentant une température supérieure à la température de fusion, à la chambre de pré-consolidation 8, présentant une température inférieure, proche de la température de cristallisation, a pour effet de refroidir la périphérie de la préforme et d'augmenter sa viscosité, tandis que le cœur de la préforme conserve une température élevée et sa fluidité.

En sortie de la chambre de pré-consolidation 8 et en amont de la chambre de formage 10, la préforme subit un passage à l'air libre 102. Au cours de ce passage, la température de la préforme diminue encore de sorte qu'une gaine solide se forme sur la périphérie de la préforme, qui conserve un cœur visqueux.

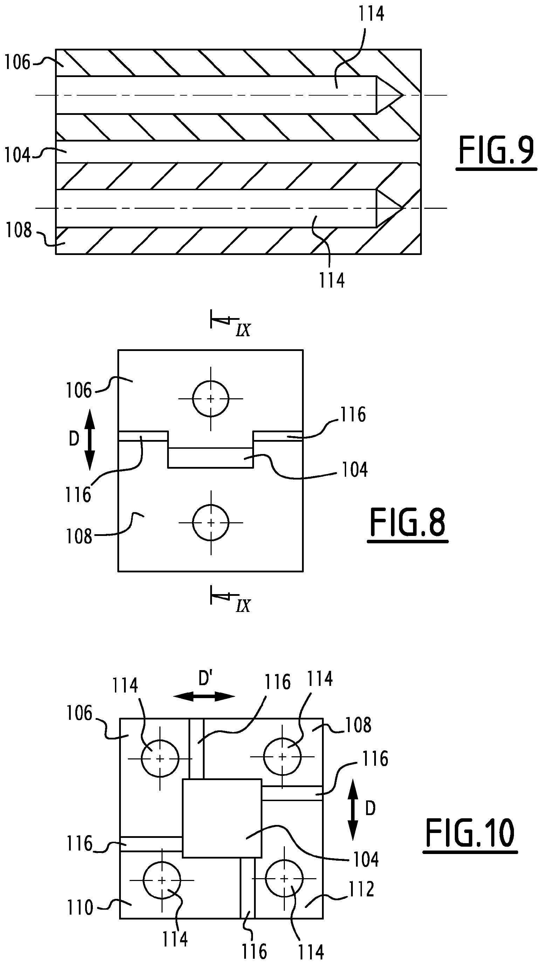

En référence aux Fig. 8 à 10, on décrit à présent la chambre de formage 10, ou filière froide.

La chambre de formage 10, ou filière froide, comprend un volume de formage 104 présentant la forme du profilé à réaliser. Le volume de formage 104 présente une température inférieure à la température de consolidation du matériau thermoplastique utilisé. Au cours du passage de la préforme dans la chambre de formage 10, le matériau thermoplastique se solidifie et le profilé est définitivement formé.

La chambre de formage 10 est par exemple formée d'au moins deux parties 106, 108, des cales de réglages 116 peuvent être ajoutées de sorte à permettre l'ajustement de la dimension du volume de formage 104 en fonction des dimensions et de la forme du profilé à réaliser, comme représenté sur la Fig. 8. Selon le mode de réalisation représenté sur la Fig. 8, les parties 106 et 108 peuvent être ajustées l'une par rapport à l'autre et permettent de modifier l'épaisseur du profilé à réaliser en modifiant la taille du volume de formage 104 selon une direction, représentée par la flèche D sur la Fig. 8. La forme des deux parties 106 et 108 n'est qu'illustrative et d'autres formes peuvent être envisagées, en fonction du type de profilé à réaliser.

Selon le mode de réalisation représenté sur la Fig. 10, la chambre de formage 10 est formée en quatre parties 106, 108, 110 et 112. Des cales de réglage 116 peuvent être ajoutées pour permettre de faire varier la taille du volume de formage 104 selon deux directions, représentées par les flèches D et D' sur la Fig. 10.

Selon l'un ou l'autre mode de réalisation, chaque partie 106, 108, 110, 112 est traversée par un canal 114 permettant de réguler la température à l'intérieur du volume de formage 104, comme cela a déjà été décrit en relation avec la chambre d'imprégnation 6 et la chambre de pré-consolidation 8.

Le fait de faire passer la préforme dans une chambre de pré-consolidation 8, puis à l'air libre 102 avant de l'introduire dans la chambre de formage 10 permet de former une gaine solide autour d'un cœur visqueux, ce qui permet d'obtenir un profilé présentant un aspect satisfaisant et d'obtenir un profilé parfaitement calibré.

En sortie de la chambre de formage 10, le profilé est apte à être découpé à la dimension voulue, dépendant de l'utilisation à laquelle il est destiné.

Le dispositif et le procédé décrit ci-dessus permettent ainsi d'obtenir un profilé composite sain, c'est-à-dire dépourvu de fibres sèches et de porosités, présentant une bonne cohésion entre sa matrice en matériau thermoplastique et son renfort en fibres et présentant une géométrie définie et un aspect de surface lisse.

## Revendications

1. Procédé de réalisation d'un profilé en matériau thermoplastique renforcé par des fibres (2) au moyen d'un dispositif de réalisation du profilé comprenant au moins une chambre d'imprégnation (6) et des moyens de circulation des fibres d'amont en aval du dispositif, ledit procédé comprenant les étapes suivantes :
- introduire et faire circuler des fibres (2) dans la chambre d'imprégnation (6),
- injecter un matériau thermoplastique dans la chambre d'imprégnation (6) de sorte à imprégner les fibres (2) circulant dans ladite chambre d'imprégnation (6) avec ledit matériau thermoplastique et à obtenir une préforme du profilé en matériau thermoplastique renforcé par des fibres (2) en sortie de la chambre d'imprégnation (6),
- réaliser le profilé en matériau thermoplastique renforcé par des fibres à partir de la préforme,
**caractérisé en ce qu'**il comprend une étape de mise en tension des fibres (2) à l'intérieur de la chambre d'imprégnation (6), le matériau thermoplastique étant injecté directement sur les fibres (2) tendues à l'intérieur de la chambre d'imprégnation (6) en au moins deux endroits de la chambre d'imprégnation (6), de part et d'autre des fibres (2) tendues, le matériau thermoplastique étant injecté directement sur les fibres (2) tendues à partir d'une paroi supérieure (22) d'un côté des fibres (2) entre une première ligne de contact inférieure (34) et une ligne de contact supérieure (30) et à partir d'une paroi inférieure (24) de l'autre côté desdites fibres (2) entre la ligne de contact supérieure (30) et une deuxième ligne de contact inférieure (38).

2. Procédé de réalisation selon la revendication 1, **caractérisé en ce qu'**il comprend une étape d'augmentation progressive de la pression entre l'entrée et la sortie de la chambre d'imprégnation (6) de sorte à augmenter la pression du matériau thermoplastique au cours de l'imprégnation des fibres (2).

3. Procédé de réalisation selon la revendication 1 ou 2, **caractérisé en ce que** la préforme est maintenue à une température proche de la température de cristallisation du matériau thermoplastique dans une chambre de pré-consolidation (8) prévue en sortie de la chambre d'imprégnation (6) et subit un passage à l'air libre entre la sortie de la chambre de pré-consolidation (8) et une chambre de formage (10) présentant une température inférieure à la température de consolidation du matériau thermoplastique, de sorte à former une gaine solide sur la périphérie du profilé en amont de la chambre de formage (10).

4. Procédé de réalisation selon l'une quelconque des revendications 1 à 3, **caractérisé en ce qu'**il comprend une étape de chauffage des fibres (2) en amont de l'entrée de la chambre d'imprégnation (6).

5. Dispositif de réalisation d'un profilé en matériau thermoplastique renforcé par des fibres (2) selon un procédé de réalisation selon l'une quelconque des revendications 1 à 4, ledit dispositif comprenant au moins des moyens de mise en circulation des fibres (2) et une chambre d'imprégnation (6) des fibres par un matériau thermoplastique, les moyens de mise en circulation étant agencés pour faire circuler les fibres (2) dans ladite chambre d'imprégnation (6), ladite chambre d'imprégnation (6) comprenant des moyens d'injection d'un matériau thermoplastique sur les fibres (2) circulant dans ladite chambre d'imprégnation (6) de sorte à imprégner lesdites fibres (2) avec ledit matériau thermoplastique et à obtenir une préforme du profilé en matériau thermoplastique renforcé par des fibres en sortie de la chambre d'imprégnation (6), **caractérisé en ce que** la chambre d'imprégnation (6) comprend des moyens de mises en tension des fibres (2) dans ladite chambre d'imprégnation (6), les moyens d'injection du matériau thermoplastique étant agencés pour injecter le matériau thermoplastique directement sur les fibres tendues (2) par les moyens de mise en tension à partir d'une paroi supérieure (22) d'un côté des fibres (2) entre une première ligne de contact inférieure (34) et une ligne de contact supérieure (30) et à partir d'une paroi inférieure (24) de l'autre côté des fibres (2) entre la ligne de contact supérieure (30) et une deuxième ligne de contact inférieure (38).

6. Dispositif de réalisation selon la revendication 5, **caractérisé en ce que** la chambre d'imprégnation (6) est définie par une partie supérieure (18), comprenant une paroi supérieure (22), et une partie inférieure (20), comprenant une paroi inférieure (24), les parois supérieure et inférieure (22, 24) s'étendant en regard l'une de l'autre, les moyens d'injection du matériau thermoplastique débouchant dans les deux parois (22, 24).

7. Dispositif de réalisation selon la revendication 6, **caractérisé en ce que** les moyens de mise en tension des fibres comprennent d'amont en aval une première ligne de contact inférieure (34) entre les fibres (2) et la paroi inférieure (24), une ligne de contact supérieure (30) entre les fibres (2) et la paroi supérieure (22) et une deuxième ligne de contact inférieure (38) entre les fibres (2) et la paroi inférieure (24), les parois supérieure et inférieure (22, 24) formant un coude au droit de chacune desdites lignes de contact (30, 34, 38) selon la direction amont-aval, de sorte à tendre les fibres (2) selon une première direction entre la première ligne de contact inférieure (34) et la ligne de contact supérieure (30) et selon une deuxième direction entre la ligne de contact supérieure (30) et la deuxième ligne de contact inférieure (38).

8. Dispositif de réalisation selon la revendication 7, **caractérisé en ce que** les fibres (2) tendues entre la première ligne de contact inférieure (34) et la ligne de contact supérieure (30) forment un coin avec la paroi supérieure (22) et les fibres (2) tendues entre la ligne de contact supérieure (30) et la deuxième ligne de contact inférieure (38) forment un coin avec la paroi inférieure (24), de sorte à accentuer la pression dans le matériau thermoplastique et l'obliger à traverser les fibres (2).

9. Dispositif de réalisation selon la revendication 5, **caractérisé en ce que** la chambre d'imprégnation (6) est définie par une partie supérieure (18), comprenant une paroi supérieure (22), par une partie inférieure (20), comprenant une paroi inférieure (24), et par un mandrin (54) s'étendant entre la partie supérieure (18) et la partie inférieure (20), et comprenant une paroi supérieure de mandrin (56), s'étendant en regard de la paroi supérieure (22) de la partie supérieure (18) et définissant avec celle-ci une chambre d'imprégnation supérieure (58), et une paroi inférieure de mandrin (60), s'étendant en regard de la paroi inférieure (24) de la partie inférieure (20) et définissant avec celle-ci une chambre d'imprégnation inférieure (62), les fibres (2) circulant dans la chambre d'imprégnation supérieure (58) et dans la chambre d'imprégnation inférieure (62), les moyens d'injection du matériau thermoplastique débouchant dans au moins deux desdites parois (22, 24, 56, 60) de sorte à injecter le matériau thermoplastique dans la chambre d'imprégnation supérieure (58) et dans la chambre d'imprégnation inférieure (62).

10. Dispositif de réalisation selon la revendication 9, **caractérisé en ce que** les moyens de mise en tension comprennent d'amont en aval
- pour la chambre d'imprégnation supérieure (58), une première ligne de contact supérieure de mandrin (68) entre les fibres (2) et la paroi supérieure de mandrin (56), une ligne de contact supérieure (64) entre les fibres (2) et la paroi supérieure (22) et une deuxième ligne de contact supérieure de mandrin (72) entre les fibres (2) et la paroi supérieure de mandrin (56), la paroi supérieure (22) de la partie supérieure (18) et la paroi supérieure du mandrin (56) formant un coude au droit de chacune desdites lignes de contact (64, 68, 72) selon la direction amont-aval, de sorte à tendre les fibres (2) dans la chambre d'imprégnation supérieure (58), selon une première direction entre la première ligne de contact supérieure de mandrin (68) et la ligne de contact supérieure (64) et selon une deuxième direction entre la ligne de contact supérieure (64) et la deuxième ligne de contact supérieure (72), et
- pour la chambre d'imprégnation inférieure (62), une première ligne de contact inférieure de mandrin (78) entre les fibres (2) et la paroi inférieure de mandrin (60), une ligne de contact inférieure (76) entre les fibres (2) et la paroi inférieure (24) et une deuxième ligne de contact inférieure de mandrin (80) entre les fibres (2) et la paroi inférieure de mandrin (60), la paroi inférieure (24) de la partie inférieure (20) et la paroi inférieure du mandrin (60) formant un coude au droit de chacune desdites lignes de contact (76, 78, 80) selon la direction amont-aval, de sorte à tendre les fibres (2) dans la chambre d'imprégnation inférieure (62), selon une troisième direction entre la première ligne de contact inférieure de mandrin (78) et la ligne de contact inférieure (76) et selon une quatrième direction entre la ligne de contact inférieure (76) et la deuxième ligne de contact inférieure (80).

11. Dispositif de réalisation selon la revendication 10, **caractérisé en ce que** les moyens d'injection du matériau thermoplastique sont agencés pour injecter le matériau plastique :
- pour la chambre d'imprégnation supérieure (58), à partir de la paroi supérieure (22) d'un côté des fibres (2) entre la première ligne de contact supérieure de mandrin (68) et la ligne de contact supérieure (64) et à partir de la paroi supérieure de mandrin (56) de l'autre côté des fibres (2) entre la ligne de contact supérieure (64) et la deuxième ligne de contact supérieure de mandrin (72),
- pour la chambre d'imprégnation inférieure (62), à partir de la paroi inférieure (24) d'un côté des fibres (2) entre la première ligne de contact inférieure de mandrin (78) et la ligne de contact inférieure (76) et à partir de la paroi inférieure de mandrin (60) de l'autre côté des fibres (2) entre la ligne de contact inférieure (76) et la deuxième ligne de contact inférieure de mandrin (80).

12. Dispositif de réalisation selon l'une quelconque des revendications 9 à 11, **caractérisé en ce que** :
- les fibres (2) tendues entre la première ligne de contact supérieure de mandrin (68) et la ligne de contact supérieure (64) forment un coin avec la paroi supérieure (22) et les fibres (2) tendues entre la ligne de contact supérieure (64) et la deuxième ligne de contact supérieure de mandrin (72) forment un coin avec la paroi supérieure (56) du mandrin (54),
- les fibres (2) tendues entre la première ligne de contact inférieure de mandrin (78) et la ligne de contact inférieure (76) forment un coin avec la paroi inférieure (24) et les fibres (2) tendues entre la ligne de contact inférieure (76) et la deuxième ligne de contact inférieure de mandrin (80) forment un coin avec la paroi inférieure (60) du mandrin (54),
de sorte à accentuer la pression dans le matériau thermoplastique et l'obliger à traverser les fibres (2).

13. Dispositif de réalisation selon l'une quelconque des revendications 6 à 12, **caractérisé en ce que** les parois inférieure et supérieure (22, 24) convergent l'une vers l'autre de l'amont de la chambre d'imprégnation (6) vers l'aval dans un plan sensiblement perpendiculaire à la direction amont-aval, de sorte que le volume de la chambre d'imprégnation (6) décroît progressivement de l'amont vers l'aval.

14. Dispositif de réalisation selon l'une quelconque des revendications 5 à 13, **caractérisé en ce que** la chambre d'imprégnation (6) est revêtue d'au moins une plaque d'isolation thermique afin de maintenir une température constante à l'intérieur de ladite chambre d'imprégnation (6).

## Patentansprüche

1. Verfahren zur Herstellung eines Profils aus thermoplastischem Material, das durch Fasern (2) verstärkt ist, mittels einer Vorrichtung zur Herstellung des Profils, die mindestens eine Imprägnierungskammer (6) und Mittel zur Zirkulation der Fasern von stromaufwärts der Vorrichtung zu stromabwärts der Vorrichtung umfasst, die folgenden Schritte umfassend:
- Einführen und Zirkulieren Lassen von Fasern (2) in die/der Imprägnierungskammer (6),
- Einspritzen eines thermoplastischen Materials in die Imprägnierungskammer (6), um die in der Imprägnierungskammer (6) zirkulierenden Fasern (2) mit dem thermoplastischem Material zu imprägnieren und eine Vorform des Profils aus mit Fasern (2) verstärktem thermoplastischen Material am Ausgang der Imprägnierungskammer (6) zu erhalten,
- Herstellen des Profils aus faserverstärktem thermoplastischen Material von der Vorform,
**dadurch gekennzeichnet, dass** es einen Schritt des unter Spannung Setzens der Fasern (2) im Inneren der Imprägnierungskammer (6) umfasst, wobei das thermoplastische Material direkt auf die gespannten Fasern (2) im Inneren der Imprägnierungskammer (6) an mindestens zwei Stellen der Imprägnierungskammer (6) beidseitig der gespannten Fasern (2) eingespritzt wird, wobei das thermoplastische Material direkt auf die gespannten Fasern (2) aus einer oberen Wandung (22) von einer Seite der Fasern (2) zwischen einer ersten unteren Kontaktlinie (34) und einer oberen Kontaktlinie (30) und aus einer unteren Wandung (24) von der anderen Seite der Fasern (2) zwischen einer oberen Kontaktlinie (30) und einer zweiten unteren Kontaktlinie (38) gespritzt wird.

2. Herstellungsverfahren nach Anspruch 1, **dadurch gekennzeichnet, dass** es einen Schritt des ständigen Erhöhens des Druck zwischen dem Eintritt in die und dem Austritt aus der Imprägnierungskammer (6) umfasst, um den Druck des thermoplastischen Materials im Laufe der Imprägnierung der Fasern (2) zu erhöhen.

3. Herstellungsverfahren nach Anspruch 1 oder 2, **dadurch gekennzeichnet, dass** die Vorform bei einer Temperatur nahe der Kristallisationstemperatur des thermoplastischen Materials in einer Kammer der Vorverfestigung (8), die am Ausgang der Imprägnierungskammer (6) vorgesehen ist, gehalten wird und einem Durchgang bei freier Luft zwischen dem Austritt der Kammer der Vorverfestigung (8) und einer Formkammer (10), die eine Temperatur kleiner als die Verfestigungstemperatur des thermoplastischen Materials aufweist, unterworfen wird, um eine feste Umhüllung auf dem Umfang des Profils stromaufwärts zur Formkammer (10) zu bilden.

4. Herstellungsverfahren nach einem beliebigen der Ansprüche 1 bis 3, **dadurch gekennzeichnet, dass** es einen Schritt des Aufheizens der Fasern (2) stromaufwärts zum Eintritt der Imprägnierungskammer (6) umfasst.

5. Vorrichtung zur Herstellung eines thermoplastischen Materials, das durch Fasern (2) verstärkt ist, gemäß einem Herstellungsverfahren nach einem beliebigen der Ansprüche 1 bis 4, wobei die Vorrichtung mindestens Mittel zum in Zirkulation Bringen der Fasern (2) und eine Kammer (6) zum Imprägnieren der Fasern mit einem thermoplastischen Material umfasst, wobei die Mittel zum in Zirkulation Bringen ausgebildet sind, die Fasern (2) in der Imprägnierungskammer (6) zirkulieren zu lassen, wobei die Imprägnierungskammer (6) Mittel zum Einspritzen des thermoplastischen Materials auf die in der Imprägnierungskammer (6) zirkulierenden Fasern (2) umfasst, um die Fasern (2) mit dem thermoplastischen Material zu imprägnieren und eine Vorform des Profils aus Faser verstärktem thermoplastischen Material am Ausgang der Imprägnierungskammer (6) zu erhalten, **dadurch gekennzeichnet, dass** die Imprägnierungskammer (6) Mittel zum unter Spannung Setzen der Fasern (2) in der Imprägnierungskammer (6) umfasst, wobei die Mittel zum Einspritzen des thermoplastischen Materials ausgebildet sind, das thermoplastische Material direkt auf die durch die Mittel zum unter Spannung Setzen gespannten Fasern (2) aus einer oberen Wandung von einer Seite der Fasern (2) zwischen einer ersten unteren Kontaktlinie (34) und einer oberen Kontaktlinie (30) und aus einer unteren Wandung (24) von der anderen Seite der Fasern (2) zwischen einer oberen Kontaktlinie (30) und einer zweiten unteren Kontaktlinie (38) zu spritzen.

6. Vorrichtung zur Herstellung nach Anspruch 5, **dadurch gekennzeichnet, dass** die Imprägnierungskammer (6) von einem oberen Bereich (18), der eine obere Wandung (22) umfasst, und einem unteren Bereich (20), der eine untere Wandung (24) umfasst, definiert wird, wobei die obere und untere Wandung (22, 24) sich gegenüberliegend erstrecken und die Mittel zum Einspritzen des thermoplastischen Materials in den zwei Wandungen (22, 24) münden.

7. Vorrichtung zur Herstellung nach Anspruch 6, **dadurch gekennzeichnet, dass** die Mittel zum unter Spannung Setzen von stromaufwärts zu stromabwärts eine erste untere Kontaktlinie (34) zwischen den Fasern (2) und der unteren Wandung (24), eine obere Kontaktlinie (30) zwischen den Fasern (2) und der oberen Wandung (22) und eine zweite untere Kontaktlinie (38) zwischen den Fasern (2) und der unteren Wandung (24) umfassen, wobei die obere und untere Wandung (22, 24) eine Biegung direkt unter jeder der Kontaktlinien (30, 34, 38) gemäß der Richtung stromaufwärts-stromabwärts bilden, um Fasern (2) gemäß einer ersten Richtung zwischen der ersten unteren Kontaktlinie (34) und der oberen Kontaktlinie (30) und gemäß einer zweiten Richtung zwischen der oberen Kontaktlinie (30) und der zweiten unteren Kontaktlinie (38) zu spannen.

8. Vorrichtung zur Herstellung nach Anspruch 7, **dadurch gekennzeichnet, dass** die zwischen der ersten unteren Kontaktlinie (34) und der oberen Kontaktlinie (30) gespannten Fasern (2) eine Biegung mit der oberen Wandung (22) bilden und die zwischen der oberen Kontaktlinie (30) und der zweiten unteren Kontaktlinie (38) gespannten Fasern (2) eine Biegung mit der unteren Wandung (24) bilden, derart dass der Druck in dem thermoplastischem Material verstärkt wird und es gezwungen wird, die Fasern (2) zu durchqueren.

9. Vorrichtung zur Herstellung nach Anspruch 5, **dadurch gekennzeichnet, dass** die Imprägnierungskammer (6) durch einen oberen Bereich (18), der eine obere Wandung (22) umfasst, durch einen unteren Bereich (20), der eine untere Wandung (24) umfasst, und durch einen Einsatz (54) begrenzt ist, der sich zwischen dem oberen Bereich (18) und dem unteren Bereich (20) erstreckt und eine obere Einsatzwandung (56), die sich gegenüber der oberen Wandung (22) des oberen Bereichs (18) erstreckt und mit dieser eine obere Imprägnierungskammer (58) definiert, und eine untere Einsatzwandung (60), die sich gegenüber der unteren Wandung (24) des unteren Bereichs (20) erstreckt und mit dieser eine untere Imprägnierungskammer (62) definiert, umfasst, wobei die Fasern (2) in der oberen Imprägnierungskammer (58) und in der unteren Imprägnierungskammer (62) zirkulieren, und die Mittel zum Einspritzen des thermoplastischen Materials in mindestens zwei der Wandungen (22, 24, 56, 60) münden, um das thermoplastischem Material in die obere Imprägnierungskammer (58) und in die untere Imprägnierungskammer (62) einzuspritzen.

10. Vorrichtung zur Herstellung nach Anspruch 9, **dadurch gekennzeichnet, dass** die Mittel zum unter Spannung Setzen von stromaufwärts zu stromabwärts umfassen
- für die obere Imprägnierungskammer (58) eine erste obere Einsatzkontaktlinie (68) zwischen den Fasern (2) und der oberen Einsatzwandung (56), eine obere Kontaktlinie (64) zwischen den Fasern (2) und der oberen Wandung (22) und eine zweite obere Einsatzkontaktlinie (72) zwischen den Fasern (2) und der oberen Einsatzwandung (56), wobei die obere Wandung (22) des oberen Bereichs (18) und die obere Einsatzwandung (56) eine Biegung direkt unter jeder der Kontaktlinie (64, 68, 72) gemäß der Richtung stromaufwärts-stromabwärts bilden, um die Fasern (2) in der oberen Imprägnierungskammer (58) gemäß einer ersten Richtung zwischen der ersten oberen Einsatzkontaktlinie (68) und der oberen Kontaktlinie (64) und gemäß einer zweiten Richtung zwischen der oberen Kontaktlinie (64) und der zweiten oberen Kontaktlinie (72) zu spannen und
- für die untere Imprägnierungskammer (62) eine erste untere Einsatzkontaktlinie (78) zwischen den Faser (2) und der unteren Einsatzwandung (60), eine untere Kontaktlinie (76) zwischen den Fasern (2) und der unteren Wandung (24) und eine zweite untere Einsatzkontaktlinie (80) zwischen den Fasern (2) und der unteren Einsatzwandung (60), wobei die untere Wandung (24) des unteren Bereichs (20) und die untere Einsatzwandung (60) eine Biegung direkt unter jeder der Kontaktlinien (76,78, 80) gemäß der Richtung stromaufwärts-stromabwärts bilden, um die Fasern (2) in der unteren Imprägnierungskammer (62) gemäß einer dritten Richtung zwischen der ersten unteren Einsatzkontaktlinie (78) und der unteren Kontaktlinie (76) und gemäß einer vierten Richtung zwischen der unteren Kontaktlinie (76) und der zweiten unteren Kontaktlinie (80) zu spannen.

11. Vorrichtung zur Herstellung nach Anspruch 10, **dadurch gekennzeichnet, dass** die Mittel zum Einspritzen des thermoplastischen Materials ausgebildet sind, das thermoplastischem Material einzuspritzen:
- für die obere Imprägnierungskammer (58) aus einer oberen Wandung (22) von einer Seite der Fasern (2) zwischen der ersten oberen Einsatzkontaktlinie (68) und der oberen Kontaktlinie (64) und aus der oberen Einsatzwandung (56) von der anderen Seite der Fasern (2) zwischen der oberen Kontaktlinie (64) und der zweiten oberen Einsatzkontaktlinie (80).

12. Vorrichtung zur Herstellung nach einem beliebigen der Ansprüche 9 bis 11, **dadurch gekennzeichnet, dass**:
- die zwischen der ersten oberen Einsatzkontaktlinie (68) und der oberen Kontaktlinie (64) gespannten Fasern (2) eine Biegung mit der oberen Wandung (22) bilden und die zwischen der oberen Kontaktlinie (64) und der zweiten oberen Einsatzkontaktlinie (72) gespannten Fasern (2) eine Biegung mit der oberen Einsatzwandung (54, 56) bilden,
- die zwischen der ersten unteren Einsatzkontaktlinie (78) und der unteren Kontaktlinie (76) gespannten Fasern (2) eine Biegung mit der unteren Wandung (24) bilden und die zwischen der unteren Kontaktlinie (76) und der zweiten unteren Einsatzkontaktlinie (80) gespannten Fasern (2) eine Biegung mit der unteren Wandung (60) des Einsatzes (54) bilden,
um den Druck in dem thermoplastischem Material zu verstärken und es zu zwingen, die Fasern (2) zu durchqueren.

13. Vorrichtung zur Herstellung nach einem beliebigen der Ansprüche 6 bis 12, **dadurch gekennzeichnet, dass** die untere und obere Wandung (22, 24) zueinander von stromaufwärts zur Imprägnierungskammer (6) zu stromabwärts in einer Ebene im Wesentlichen senkrecht zur Richtung stromaufwärts-stromabwärts konvergieren, derart dass das Volumen der Imprägnierungskammer (6) kontinuierlich von stromaufwärts stromabwärts abnimmt.

14. Vorrichtung zur Herstellung nach einem beliebigen der Ansprüche 5 bis 13, **dadurch gekennzeichnet, dass** die Imprägnierungskammer (6) mit mindestens einer thermischen Isolierungsschicht beschichtet ist, um im Inneren der Imprägnierungskammer (6) eine Temperatur konstant zu halten.

## Claims

1. Method for producing a profile of thermoplastic material reinforced with fibres (2) by means of a device for producing the profile comprising at least one impregnation chamber (6) and means for circulating the fibres from upstream to downstream of the device, said method comprising the following steps:
- introducing fibres (2) into the impregnation chamber (6) and circulating them therein,
- injecting a thermoplastic material into the impregnation chamber (6) so as to impregnate the fibres (2) circulating in said impregnation chamber (6) with said thermoplastic material and obtain a preform of the profile of thermoplastic material reinforced with fibres (2) at the exit of the impregnation chamber (6),
- producing the profile of thermoplastic material reinforced with fibres from the preform,
**characterised in that** it comprises a step of tensioning the fibres (2) inside the impregnation chamber (6), the thermoplastic material being injected directly onto the taut fibres (2) inside the impregnation chamber (6) in at least two locations of the impregnation chamber (6), on either side of the taut fibres (2), the thermoplastic material being injected directly onto the taut fibres (2) from an upper wall (22) on one side of the fibres (2) between a first lower contact line (34) and an upper contact line (30), and from a lower wall (24) on the other side of said fibres (2) between the upper contact line (30) and a second lower contact line (38).

2. Production method according to claim 1, **characterised in that** it comprises a step of progressively increasing the pressure between the entry and the exit of the impregnation chamber (6) so as to increase the pressure of the thermoplastic material during impregnation of the fibres (2).

3. Production method according to claim 1 or 2, **characterised in that** the preform is maintained at a temperature close to the crystallisation temperature of the thermoplastic material in a pre-consolidation chamber (8) provided at the exit of the impregnation chamber (6) and passes through open air between the exit of the pre-consolidation chamber (8) and a forming chamber (10) having a temperature below the consolidation temperature of the thermoplastic material, so as to form a solid sheath at the periphery of the profile upstream of the forming chamber (10).

4. Production method according to any one of claims 1 to 3, **characterised in that** it comprises a step of heating the fibres (2) upstream of the entry of the impregnation chamber (6).

5. Device for producing a profile of thermoplastic material reinforced with fibres (2) by a production method according to any one of claims 1 to 4, said device comprising at least means for circulating the fibres (2) and an impregnation chamber (6) for impregnating the fibres with a thermoplastic material, the circulating means being arranged to circulate the fibres (2) in said impregnation chamber (6), said impregnation chamber (6) comprising means for injecting a thermoplastic material onto the fibres (2) circulating in said impregnation chamber (6) so as to impregnate said fibres (2) with said thermoplastic material and obtain a preform of the profile of thermoplastic material reinforced with fibres at the exit of the impregnation chamber (6), **characterised in that** the impregnation chamber (6) comprises means for tensioning the fibres (2) in said impregnation chamber (6), the means for injecting the thermoplastic material being arranged to inject the thermoplastic material directly onto the fibres (2) tightened by the tensioning means from an upper wall (22) on one side of the fibres (2) between a first lower contact line (34) and an upper contact line (30) and from a lower wall (24) on the other side of the fibres (2) between the upper contact line (30) and a second lower contact line (38).

6. Production device according to claim 5, **characterised in that** the impregnation chamber (6) is defined by an upper portion (18), comprising an upper wall (22), and a lower portion (20), comprising a lower wall (24), the upper and lower walls (22, 24) extending opposite one another, the means for injecting the thermoplastic material opening in the two walls (22, 24).

7. Production device according to claim 6, **characterised in that** the means for tensioning the fibres comprise, from upstream to downstream, a first lower contact line (34) between the fibres (2) and the lower wall (24), an upper contact line (30) between the fibres (2) and the upper wall (22), and a second lower contact line (38) between the fibres (2) and the lower wall (24), the upper and lower walls (22, 24) forming a bend perpendicular to each of said contact lines (30, 34, 38) in the upstream-downstream direction, so as to tighten the fibres (2) in a first direction between the first lower contact line (34) and the upper contact line (30) and in a second direction between the upper contact line (30) and the second lower contact line (38).

8. Production device according to claim 7, **characterised in that** the fibres (2) tightened between the first lower contact line (34) and the upper contact line (30) form a corner with the upper wall (22), and the fibres (2) tightened between the upper contact line (30) and the second lower contact line (38) form a corner with the lower wall (24), so as to increase the pressure in the thermoplastic material and force it to cross the fibres (2).

9. Production device according to claim 5, **characterised in that** the impregnation chamber (6) is defined by an upper portion (18), comprising an upper wall (22), by a lower portion (20), comprising a lower wall (24), and by a chuck (54) extending between the upper portion (18) and the lower portion (20) and comprising an upper chuck wall (56) extending opposite the upper wall (22) of the upper portion (18) and defining therewith an upper impregnation chamber (58), and a lower chuck wall (60) extending opposite the lower wall (24) of the lower portion (20) and defining therewith a lower impregnation chamber (62), the fibres (2) circulating in the upper impregnation chamber (58) and in the lower impregnation chamber (62), the means for injecting the thermoplastic material opening in at least two of said walls (22, 24, 56, 60) so as to inject the thermoplastic material into the upper impregnation chamber (58) and into the lower impregnation chamber (62).

10. Production device according to claim 9, **characterised in that** the tensioning means comprise, from upstream to downstream
- for the upper impregnation chamber (58), a first upper chuck contact line (68) between the fibres (2) and the upper chuck wall (56), an upper contact line (64) between the fibres (2) and the upper wall (22), and a second upper chuck contact line (72) between the fibres (2) and the upper chuck wall (56), the upper wall (22) of the upper portion (18) and the upper wall of the chuck (56) forming a bend perpendicular to each of said contact lines (64, 68, 72) in the upstream-downstream direction, so as to tighten the fibres (2) in the upper impregnation chamber (58) in a first direction between the first upper chuck contact line (68) and the upper contact line (64) and in a second direction between the upper contact line (64) and the second upper contact line (72), and
- for the lower impregnation chamber (62), a first lower chuck contact line (78) between the fibres (2) and the lower chuck wall (60), a lower contact line (76) between the fibres (2) and the lower wall (24), and a second lower chuck contact line (80) between the fibres (2) and the lower chuck wall (60), the lower wall (24) of the lower portion (20) and the lower wall of the chuck (60) forming a bend perpendicular to each of said contact lines (76, 78, 80) in the upstream-downstream direction, so as to tighten the fibres (2) in the lower impregnation chamber (62) in a third direction between the first lower chuck contact line (78) and the lower contact line (76) and in a fourth direction between the lower contact line (76) and the second lower contact line (80).

11. Production device according to claim 10, **characterised in that** the means for injecting the thermoplastic material are arranged to inject the plastics material:
- for the upper impregnation chamber (58), from the upper wall (22) on one side of the fibres (2) between the first upper chuck contact line (68) and the upper contact line (64) and from the upper chuck wall (56) on the other side of the fibres (2) between the upper contact line (64) and the second upper chuck contact line (72),
- for the lower impregnation chamber (62), from the lower wall (24) on one side of the fibres (2) between the first lower chuck contact line (78) and the lower contact line (76) and from the lower chuck wall (60) on the other side of the fibres (2) between the lower contact line (76) and the second lower chuck contact line (80).

12. Production device according to any one of claims 9 to 11, **characterised in that**:
- the fibres (2) tightened between the first upper chuck contact line (68) and the upper contact line (64) form a corner with the upper wall (22), and the fibres (2) tightened between the upper contact line (64) and the second upper chuck contact line (72) form a corner with the upper wall (56) of the chuck (54),
- the fibres (2) tightened between the first lower chuck contact line (78) and the lower contact line (76) form a corner with the lower wall (24), and the fibres (2) tightened between the lower contact line (76) and the second lower chuck contact line (80) form a corner with the lower wall (60) of the chuck (54),
so as to increase the pressure in the thermoplastic material and force it to cross the fibres (2).

13. Production device according to any one of claims 6 to 12, **characterised in that** the lower and upper walls (22, 24) converge towards one another from upstream of the impregnation chamber (6) to downstream in a plane substantially perpendicular to the upstream-downstream direction, so that the volume of the impregnation chamber (6) decreases progressively from upstream to downstream.

14. Production device according to any one of claims 5 to 13, **characterised in that** the impregnation chamber (6) is covered with at least one thermal insulation board so as to maintain a constant temperature inside said impregnation chamber (6).
